# EUROPEAN PATENT SPECIFICATION

(11) **EP 1 755 992 B1**
(45) Date of publication and mention of the grant of the patent: **12.11.2008**
(21) Application number: 05736142.0
(22) Date of filing: 29.04.2005
(51) Int. Cl.: B65G 47/244, B65G 47/82

(54) **SYSTEM FOR ROTATING PRODUCTS HAVING AN IRREGULAR GEOMETRICAL SHAPE**
SYSTEM ZUM DREHEN VON PRODUKTEN MIT EINER UNREGELMÄSSIGEN GEOMETRISCHEN FORM
SYSTEME DESTINE A FAIRE TOURNER DES PRODUITS PRESENTANT UNE FORME GEOMETRIQUE IRREGULIERE

(30) Priority: 03.05.2004 DK 200400700; 11.01.2005 DK 200500054
(43) Date of publication of application: 28.02.2007
(73) Proprietor: KJ Maskinfabriken A/S, 6710 Esbjerg (DK)
(72) Inventor: BUSCH, Finn Maag, DK-6710 Esbjerg V (DK)
(74) Representative: Inspicos A/S
(86) International application number: PCT/DK2005/000290
(87) International publication number: WO 2005/105626

(56) References cited:
- EP-A- 1 086 912
- WO-A-20/04076319
- US-A- 4 909 376
- US-A- 5 967 292

## Description

### FIELD OF THE INVENTION

The present invention relates to a system for rotating products having an irregular geometrical shape, wherein the products may be rotated by an individually determined rotational angle according to the preamble of claim 1. The individual rotational angle is determined on the basis of the orientation of a product when it arrives at the system.

The invention further relates to a transport system according to the preamble of claim 14 comprising a system as described above and a method for rotating products having an irregular geometrical shape according to the preamble of claim 16.

### BACKGROUND OF THE INVENTION

Processing lines for processing products often require that the products arrive in a predetermined position and/or orientation, in order to allow for automatic further processing or manual processing at an ergonomically optimal position.

A number of rotation units exist which are suitable for rotating products having a uniform and regular geometrical shape. These are applied in many places, e.g. in front of automatic palletizing systems, where rotation of the products may assist in creating a desired pattern of products on the resulting pallet. Thereby the pallet is utilized to the greatest extent possible, and it is relatively stable, since a stabilizing bond is formed between the individual layers on the pallet.

Such rotation units are often provided with a lifting unit being movable from beneath and a retaining unit movable from above. Thereby the product can be rotated while it is raised above the conveying means by rotationally driving the lifting unit and/or the retaining unit.

Document US-A-5 967 292 discloses a system for rotating products according to the preamble of claim 1.

Rotation of products having an irregular geometrical shape may be required in processing lines applied within a number of various industries, e.g. the food industry, such as in slaughterhouses.

With increasing automation and focus on ergonomics in slaughterhouses it is important that products, such as pieces of meat from an animal carcase, arrive at the subsequent process in a processing line orientated and positioned in a correct manner, thereby allowing an automatic process to be performed with an optimal yield, or allowing a manual process to be performed in an ergonomically correct manner.

A subsequent process can, e.g., be automatic derinding, where the lard portion of the meat is cut away, and a correct positioning of the product relatively to the derinding equipment is crucial for a correct processing with a high yield. At the present time the products are positioned manually in front of the derinding equipment.

Another subsequent process can be hanging product pieces on rods provided with hooks (so-called 'christmas trees') for further transportation or intermediate storage. At the present time the product pieces are rotated manually in order to make it possible to hang them on the rods with hooks (christmas trees). This is manually demanding since such products pieces are normally very heavy.

Slaughterhouses impose increasing demands on correct orientation and positioning of product pieces relatively to the subsequent process in the processing line in order to allow an automatic process to be performed in an optimal manner, or in order to allow a manual process to be performed in an ergonomically optimal manner.

At the same time it is required that equipment for processing products is hygienic, and that cleaning of the equipment can be performed easily, i.e. with a small effort and incurring low costs.

### SUMMARY OF THE INVENTION

It is an object of the invention to provide a system for rotating products having an irregular geometrical shape, the system being capable of ensuring a correct positioning and orientation of an arriving product before it is passed on for further processing.

It is a further object of the invention to provide a system for rotating products having an irregular geometrical shape which improves the ergonomics of a possible manual further processing of the product, relatively to existing systems.

It is an even further object of the present invention to provide a transport system for handling products having an irregular geometrical shape, wherein the required manual contribution is minimised.

According to a first aspect of the invention the above and other objects are fulfilled by providing a system for rotating products having an irregular geometrical shape according to the appended claim 1.

According to a second aspect of the invention the above and other objects are fulfilled by providing a method for rotating a product according to the appended claim 16.

Since the arriving products, when applying the system and/or the method according to the invention, are rotated to a desired position and orientation in an automatic manner, the required manual processing steps are reduced considerably, and improved ergonomics are thereby obtained. Simultaneously it is obtained that the products are positioned in such a manner that the yield of subsequent automatic or manual processes is optimised.

The rotation system comprises means for engaging the products. These are a plurality of rods, e.g. at least substantially vertical rods.

Each of the rods is movable in at least substantially mutual parallel directions. In a preferred embodiment the product which is to be rotated rests on an at least substantially horizontal plane surface. In this case the rods may advantageously be movable in an at least substantially vertical direction, i.e. they are movable in a direction which is at least substantially normal to a plane defined by the surface upon which the product rests. Alternatively the direction of movement of the rods may form any other suitable angle with the surface upon which the product rests.

The rotational axis may also be at least substantially parallel to the direction of movement of the rods.

The rods are arranged in such a way that their end parts form a pattern, said pattern comprising at least part of at least one circle. This pattern may, e.g., be one or more full circles and/or one or more parts of one or more circles. A part of a circle may, e.g., be a semicircle, a quarter of a circle, or a part covering an arbitrary desired angular part of a circle. In case two or more circles/parts of circles are present, these may be arranged in such a way relatively to each other, that at least part of at least two at least substantially concentric circles are formed. Alternatively, the circles may be arranged in such a way that the circles are completely non-overlapping, or in such a way that they intersect or are tangent to each other.

Thus, in a preferred embodiment a row of rods are arranged at least substantially vertically in a circle, in such a way that the product is retained in an at least substantially vertical position by at least two guide disks having guide holes for the rods. The guide disks are preferably fixedly mounted at least substantially perpendicularly to an at least substantially vertical rotational axle, in such a way that rotating the axle results in an at least substantially horizontal rotation of the guide disks, and thereby a rotation of the vertical rods about a centre point of the circle which they define. When applying multiple rows of rods, these are arranged in at least substantially concentric circles. The system may advantageously be positioned above a conveyor.

The dimension(s) of the circular row(s) where the rods are mounted, as well as the amount of circular rows and the amount of rods in the circular row(s) will depend on the product(s) which is/are to be rotated. When using multiple at least substantially concentric circular rows of rods, products with large mutual variations in terms of geometrical dimensions may be rotated.

Alternatively, the rods may be arranged in such a way that their end parts form any other partly circular pattern, such as an oval and/or parts of one or more such patterns.

The system may further comprise means for moving the rods. The means for moving the rods may be adapted to move each of the rods in an at least substantially vertical direction, e.g. as described above.

In a preferred embodiment the means for moving the rods comprises an end part mounted on each of the rods and at least one lifting part adapted to engage at least some of the end parts in order to move at least some of the rods.

An end part may, e.g., be a ring or a cylinder shaped disk having a larger outer diameter than the rods. The lifting part may in this case comprise a lifting ring having an outer diameter which is smaller than the diameter of a circle or a part of a circle defined by the rods, but larger than the diameter of the circle defined by the inner part of the rings/disks which are mounted on the corresponding rods. This lifting ring may thereby engage a number of rings/disks, and when the lifting ring is moved upwards the rods will accordingly also be moved upwards.

In case the rods form at least part of two concentric circles, the inner diameter of the lifting ring must be larger than the outer boundary circle of the inner row of vertical rods, and smaller than the outer boundary circle of the end rings/disks mounted on the vertical rods. Thereby one lifting ring can simultaneously engage end rings/disks associated with both circles, and it is therefore possible to lift rods from both circles simultaneously. Similarly, further rows of rods may be mounted in such a way that one lifting ring is provided for each two rows of rods.

The retaining part may further comprise means for controlling the orientation of the rods. The means for controlling the orientation of the rods may be adapted to maintain the rods in an at least substantially vertical orientation.

The lifting ring(s) may, thus, advantageously be provided with at least substantially vertical guides and at least substantially vertical raising/lowering means. The lifting ring(s) is/are arranged above an upper guide disk and below the rings/disks mounted on the rods. When the lifting ring(s) is/are raised the rods will accordingly also be raised, since they are carried by means of the lower part of the mounted end rings/disks.

When the lifting ring(s) is/are lowered the rods will accordingly also be lowered due to gravity. If one or more of the rods touches a product positioned on the conveyor arranged beneath the system before the lifting ring is at its lowermost position, lowering of this/these rod(s) will be stopped, and it/they will remain resting on the product, while the remaining rods will continue to their lowermost position. The product will thereby be fixed between a certain number of rods, in such a way that the product will rotate along when the rotational axle with the fixedly mounted guide disks is rotated. The rotation is stopped when the product is in a predetermined position, and the lifting ring is raised along with the vertical rods to an uppermost position, and the product on the conveyor may be transported further on in the processing line. The rotational axle may advantageously be at least substantially continuously rotatable, thereby allowing any desirable rotational angle to be obtained. Thereby the product may be rotated exactly to the desired position.

In any of the embodiments described above the rods may preferably be moved by means of at least one actuator. The actuator is preferably a vertical actuator adapted to raise/lower the rods in an at least substantially vertical direction.

The system may further comprise a conveyor for receiving a product, the conveyor preferably being positioned below the rotation system. In this case the rotation system may be adapted to be lowered onto an arriving product, thereby causing retaining and rotation of the product.

The means for determining the orientation of each product may comprise optical means, such as a camera. Determining the orientation of the products may, thus, advantageously be performed by means of so-called vision based techniques.

The system of the invention may advantageously form part of a transport system, e.g. a transport system forming a part of a processing line, such as a processing line in a food company, such as a slaughterhouse. Such a transport system further comprises at least one conveyor positioned upstream relatively to the system, and at least one conveyor positioned downstream relatively to the system, in order to allow products to be led to and from the system without the requirement of manual steps.

In the present context the term 'upstream' relatively to a given point in a processing line should be interpreted as a point in the processing line which a product, during normal operation, would arrive at before it arrives at the given point. Analogously, the term 'downstream' should be interpreted as a point which the product would arrive at after its arrival at the given point.

The arriving products may have a regular sequentially predefined positioning so that the rotational angle of the products can be established beforehand and supplied to the control means of the rotation system in order to ensure correct positioning of the products for subsequent processing. The stop position of the products beneath the rotation system may be determined on the basis of a detection of the front edge or the rear edge of the product, and based on empirical values the stop position may be calculated there from.

The products may arrive randomly positioned, and a detection at arrival at the rotation system detects this position, and the control algorithm can calculate the rotational angle of the individual product, thereby ensuring correct positioning of the product in the subsequent processing line. The detecting system may comprise a vision recording of an arriving product which is compared to a desired positioning. Based on this the rotational angle and the position where the product must stop under the rotation system are calculated. It is desired that the stop position is the position where the centre of gravity of the product is at the centre of the rotational movement, since this results in an ideal rotation.

### BRIEF DESCRIPTION OF THE DRAWINGS

The invention will now be further described with reference to the accompanying drawings in which
Fig. 1 is a top view of the rods with lifting ring and guide disks,
Fig. 2 is a cross sectional view of a preferred outline of the rotation system along the line A - A of Fig. 1 with the rods and the lifting ring in a raised position,
Fig. 3 is a cross sectional view of a preferred outline of the rotation system along the line A - A of Fig. 1 with the rods and the lifting ring in a lowered position,
Figs. 4A, 4B and 4C schematically and sequentially illustrate rotation of a product having an irregular geometrical shape, and
Fig. 5 schematically illustrates rotation of sequentially arriving products.

### DETAILED DESCRIPTION OF THE DRAWINGS

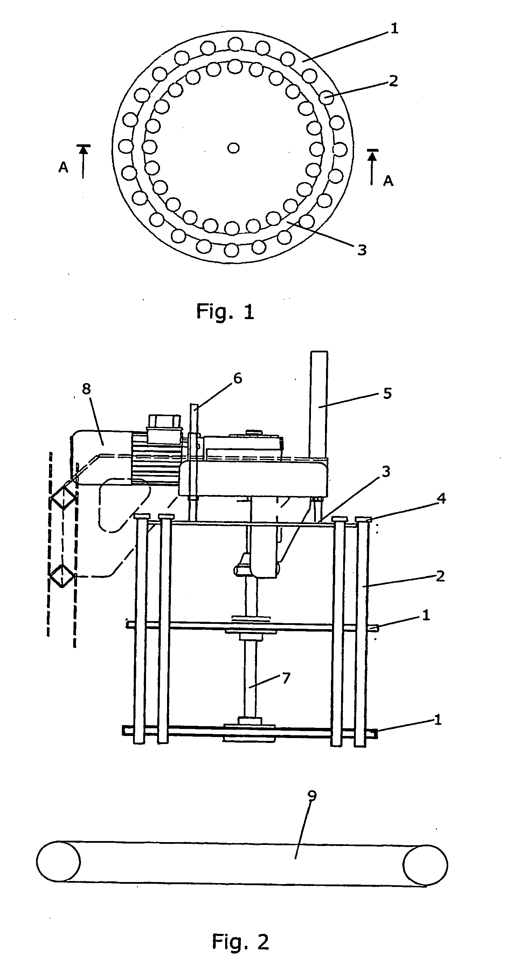

Fig. 1 is a top view of the rotation system with guide disks 1 and vertical rods 2 arranged in a circular row. In the Figure the end pieces of the vertical rods 2 form two concentric circular rows. Furthermore, a lifting ring 3 for moving the vertical rods 2 in an at least substantially vertical direction is shown.

Fig. 2 is a side view of the rotation system, corresponding to a cross section along the line A - A in Fig. 1. For the sake of clarity, Fig. 2 only shows the rods 2 which are positioned in the right and left sides of the cross section, respectively. It should, however, be understood that the remaining rods 2, as shown in Fig. 1, are also present in the system shown in Fig. 2. The vertical rods 2 have been raised to an upper position by lifting ring 3 which carries the vertical rods 2 by means of the mounted end rings/disks 4. Lifting ring 3 is moved by means of actuator(s) 5, and its vertical movements are controlled by guides 6. The guide disks 1 are fixedly connected to a rotating axle 7, which is connected to a drive unit 8. Beneath the rotation system a conveyor 9 for conveying the product pieces is mounted.

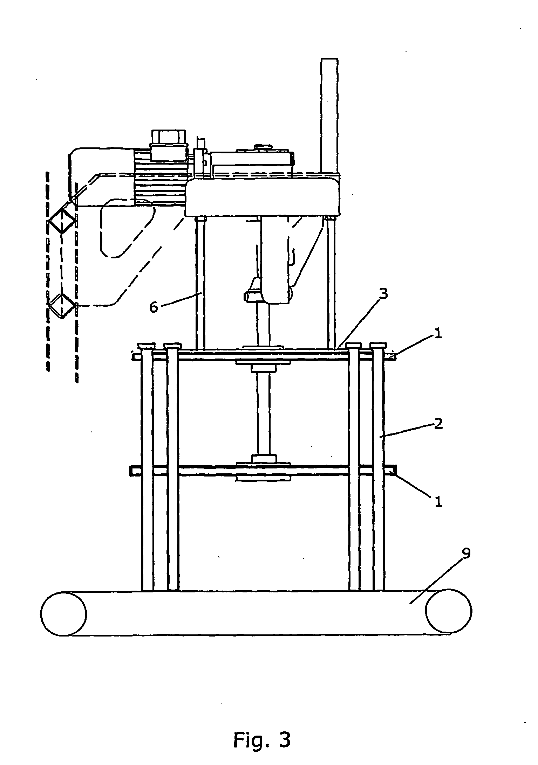

Fig. 3 shows the rotation system with the lifting ring 3 in a lower position, and the vertical rods 2 have been lowered to the level of the conveyor 9 due to gravity.

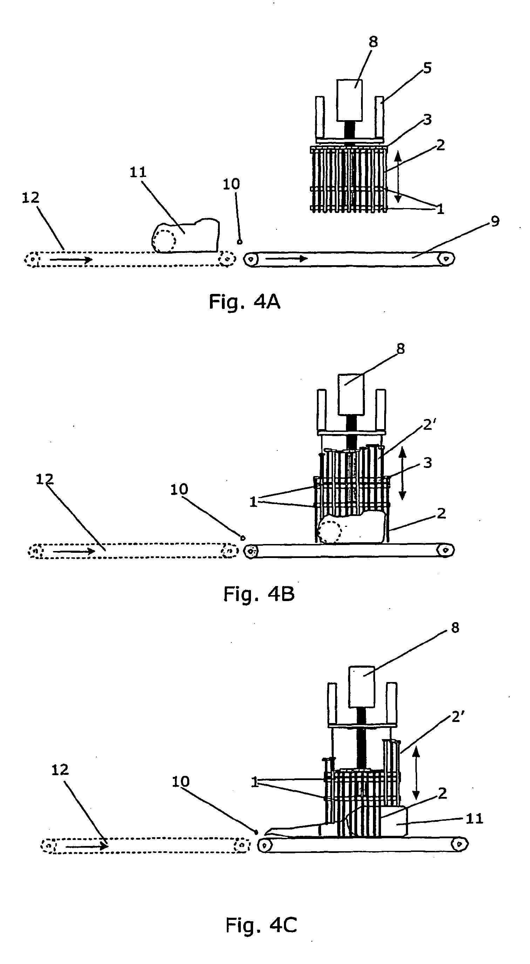

Figs. 4A, 4B and 4C sequentially illustrate rotation of a product 11 having an irregular geometrical shape. The product 11 arrives in Fig. 4A on a preceding conveyor 12. The front and rear edges of the product 11 are detected by a detector 10 during conveying from conveyor 12 to conveyor 9, i.e. while the product 11 is moved to a position beneath the rotation system. The product 11 is stopped beneath the rotation system based on a calculation or a previously empirically determined position as shown in Fig. 4B. The lifting ring 3 is lowered, and the vertical rods 2 are lowered due to gravity. During this operation some of the rods 2' will remain resting on the product 11, and are therefore unable to continue the lowering movement to the lower position. Other rods 2, which are not inhibited by the product 11, are lowered to their lowermost position. Some of the rods 2' thus resting on the product 11, while other of the rods 2 are positioned beside the product 11, causes the product 11 to be retained by the completely lowered rods 2 during a subsequent rotation of the rotation system, and the product 11 will thereby rotate along when the rotation system is rotated. Thereby a rotational angle is obtained for the product 11 which is equal to the angle which the rotation system is rotated through.

The guide disks 1 are rotated through the predefined or calculated rotational angle by drive unit 8. Thereby the positioning of the product 11 after the rotation will be correct relatively to the subsequent processing.

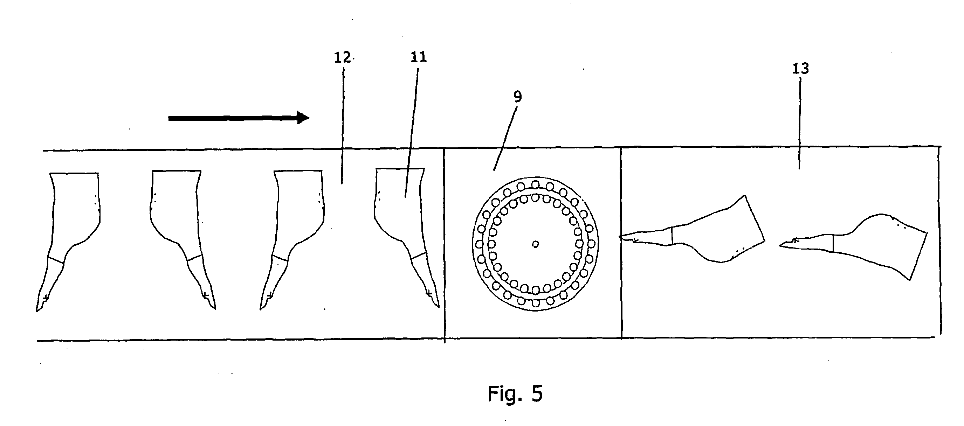

Fig. 5 shows an example of products 11 arriving sequentially positioned. In this example, the products 11 arrive with every second product 11 positioned in the same manner. The products 11 leave the rotation system on conveyor 13 positioned in a manner which is desired for the subsequent processing of the products 11.

## Claims

1. A system for rotating products (11) having an irregular geometrical shape, the system comprising:
- a rotation system comprising a retaining part, and means (8) for rotating the retaining part, and thereby a retained product (11), with an individually determined rotational angle about a rotational axis,
- means for determining the orientation of each product (11) upon arrival at the system, and
- a control system for controlling the rotation system, said control system being operatively connected to the determining means, the control system being adapted to determine the rotational angle based on said orientation, and to control the rotation system accordingly
**characterized in that**
the retaining part has a plurality of individually movable rods (2) adapted to engage a product (11), thereby at least substantially fixing the product (11) relatively to the retaining part, and **in that** the rods (2) are arranged in such a way that their end parts form a pattern, said pattern comprising at least part of at least one circle.

2. A system according to claim 1, wherein each of the rods (2) is movable in at least substantially mutual parallel directions.

3. A system according to claim 2, wherein the rotational axis is also at least substantially parallel to the direction of movement of the rods (2).

4. A system according to any of the preceding claims, wherein the rods (2) are arranged in such a way that their end parts form a pattern, said pattern comprising at least parts of at least two at least substantially concentric circles.

5. A system according to any of the preceding claims, further comprising means for moving the rods (2).

6. A system according to claim 5, wherein the means for moving the rods (2) is adapted to move each of the rods (2) in an at least substantial vertical direction.

7. A system according to claim 6, wherein the means for moving the rods (2) comprises an end part mounted on each of the rods (2) and at least one lifting part adapted to engage at least some of the end parts in order to move at least some of the rods (2).

8. A system according to any of claims 5-7, wherein the means for moving the rods (2) comprises at least one actuator.

9. A system according to any of the preceding claims, wherein the retaining part further comprises means (1) for controlling the orientation of the rods (2).

10. A system according to claim 9, wherein the means (1) for controlling the orientation of the rods (2) is adapted to maintain the rods (2) in an at least substantially vertical orientation.

11. A system according to any of the preceding claims, further comprising a conveyor (9) for receiving a product (11), the conveyor (9) being positioned below the rotation system, and wherein the rotation system is adapted to be towered onto an arriving product (11).

12. A system according to any of the preceding claims, wherein the means for determining the orientation of each product (11) comprises optical means.

13. A system according to claim 12, wherein the optical means comprises a camera.

14. A transport system comprising a system for rotating products (11), at least one conveyor (12) positioned upstream relatively to the system, and at least one conveyor (13) positioned downstream relatively to the system, **characterized in that** the system for rotating products (11) is a system according to any of claims 1 - 13.

15. A transport system according to claim 14, said transport system forming part of a processing line.

16. A method for rotating a product, the method comprising the steps of:
- determining the orientation of a product,
- comparing the orientation of the product with a desired orientation,
- based on said comparison, determining a rotational angle necessary to obtain the desired orientation, **characterized in that** it further comprises the steps of:
- moving a retaining part comprising a plurality of rods into engagement with the product, thereby at least substantially fixing the product relatively to the retaining part, said rods being arranged in such a way that their end parts form a pattern, said pattern comprising at least part of at least one circle, and
- rotating the retaining part in accordance with the rotational angle, thereby rotating the product in accordance with the rotational angle.

17. A method according to claim 16, wherein the step of determining the orientation of the product is performed by means of a vision based technique.

## Patentansprüche

1. System zum Drehen von Produkten (11) mit einer unregelmäßigen geometrischen Gestalt, wobei das System Folgendes umfasst:
- ein Rotationssystem, das einen Halteteil und ein Mittel (8) zum Drehen des Halteteils, und **dadurch** eines gehaltenen Produkt (11), mit einem individuell bestimmten Drehwinkel um eine Drehachse herum umfasst,
- ein Mittel zum Bestimmen der Ausrichtung jedes Produkts (11) beim Eintreffen an dem System, und
- ein Steuersystem zum Steuern des Rotationssystems, wobei das Steuersystem mit dem Bestimmungsmittel wirkverbunden ist, wobei das Steuersystem dafür geeignet ist, den Drehwinkel anhand der Ausrichtung zu bestimmen und die das Rotationssystem entsprechend zu steuern,
**dadurch gekennzeichnet, dass**
der Halteteil mehrere individuell bewegliche Stäbe (2) aufweist, die dafür geeignet sind, ein Produkt (11) in Eingriff zu nehmen und **dadurch** das Produkt (11) mindestens im Wesentlichen relativ zu dem Halteteil zu fixieren, und dass die Stäbe (2) in einer solchen Weise angeordnet sind, dass ihre Endteile ein Muster bilden, wobei das Muster mindestens einen Teil von mindestens einem Kreis umfasst.

2. System nach Anspruch 1, wobei jeder der Stäbe (2) in mindestens im Wesentlichen zueinander parallelen Richtungen beweglich ist.

3. System nach Anspruch 2, wobei die Drehachse ebenfalls mindestens im Wesentlichen parallel zu der Bewegungsrichtung der Stäbe (2) verläuft.

4. System nach einem der vorangehenden Ansprüche, wobei die Stäbe (2) in einer solchen Weise angeordnet sind, dass ihre Endteile ein Muster bilden, wobei das Muster mindestens Teile von mindestens zwei mindestens im Wesentlichen konzentrischen Kreisen umfasst.

5. System nach einem der vorangehenden Ansprüche, das des Weiteren ein Mittel zum Bewegen der Stäbe (2) umfasst.

6. System nach Anspruch 5, wobei das Mittel zum Bewegen der Stäbe (2) dafür geeignet ist, jeden der Stäbe (2) in einer mindestens im Wesentlichen vertikalen Richtung zu bewegen.

7. System nach Anspruch 6, wobei das Mittel zum Bewegen der Stäbe (2) einen Endteil umfasst, der an jedem der Stäbe (2) montiert ist, und mindestens einen Hebeteil umfasst, der dafür geeignet ist, mindestens einige der Endteile in Eingriff zu nehmen, um mindestens einige der Stäbe (2) zu bewegen.

8. System nach einem der Ansprüche 5-7, wobei das Mittel zum Bewegen der Stäbe (2) mindestens einen Aktuator umfasst.

9. System nach einem der vorangehenden Ansprüche, wobei der Halteteil des Weiteren ein Mittel (1) zum Steuern der Ausrichtung der Stäbe (2) umfasst.

10. System nach Anspruch 9, wobei das Mittel (1) zum Steuern der Ausrichtung der Stäbe (2) dafür geeignet ist, die Stäbe (2) in einer mindestens im Wesentlichen vertikalen Ausrichtung zu halten.

11. System nach einem der vorangehenden Ansprüche, das des Weiteren eine Transporteinrichtung (9) zum Entgegennehmen eines Produkts (11) umfasst, wobei die Transporteinrichtung (9) unterhalb des Rotationssystems angeordnet ist und wobei das Rotationssystem dafür geeignet ist, auf ein ankommendes Produkt (11) abgesenkt zu werden.

12. System nach einem der vorangehenden Ansprüche, wobei das Mittel zum Bestimmen der Ausrichtung jedes Produkts (11) ein optisches Mittel umfasst.

13. System nach Anspruch 12, wobei das optische Mittel eine Kamera umfasst.

14. Transportsystem, das ein System zum Drehen von Produkten (11) umfasst, mindestens eine Transporteinrichtung (12) umfasst, die stromaufwärts relativ zu dem System angeordnet ist, und mindestens eine Transporteinrichtung (13) umfasst, die stromabwärts relativ zu dem System angeordnet ist, **dadurch gekennzeichnet, dass** das System zum Drehen von Produkten (11) ein System nach einem der Ansprüche 1-13 ist.

15. Transportsystem nach Anspruch 14, wobei das Transportsystem einen Teil einer Verarbeitungsstrecke bildet.

16. Verfahren zum Drehen eines Produkts, wobei das Verfahren die folgenden Schritte umfasst:
- Bestimmen der Ausrichtung eines Produkts,
- Vergleichen der Ausrichtung des Produkts mit einer gewünschten Ausrichtung,
- Bestimmen, anhand dieses Vergleichs, eines Drehwinkels, der erforderlich ist, um die gewünschte Ausrichtung zu erhalten, **dadurch gekennzeichnet, dass** es des Weiteren die folgenden Schritte umfasst:
- Bewegen eines Halteteils, das mehrere Stäbe umfasst, in Eingriff mit dem Produkt, wodurch das Produkt mindestens im Wesentlichen relativ zu dem Halteteil fixiert wird, wobei die Stäbe in einer solchen Weise angeordnet sind, dass ihre Endteile ein Muster bilden, wobei das Muster mindestens einen Teil von mindestens einem Kreis umfasst, und
- Drehen des Halteteils entsprechend dem Drehwinkel, wodurch das Produkt entsprechend dem Drehwinkel gedreht wird.

17. Verfahren nach Anspruch 16, wobei der Schritt des Bestimmens der Ausrichtung des Produkts mit Hilfe einer auf Sicht beruhenden Technik ausgeführt wird.

## Revendications

1. Système pour mettre en rotation des produits (11) ayant une forme géométrique irrégulière, le système comprenant :
- un système de rotation comprenant une partie de rétention, et des moyens (8) pour mettre en rotation la partie de rétention et ainsi un produit retenu (11), avec un angle de rotation autour d'un axe de rotation déterminé individuellement,
- des moyens pour déterminer l'orientation de chaque produit (11) à l'arrivée dans le système, et
- un système de commande pour commander le système de rotation, ledit système de commande étant connecté en fonctionnement aux moyens de détermination, le système de commande étant adapté afin de déterminer l'angle de rotation sur la base de ladite orientation, et de commander le système de rotation en conséquence,
**caractérisé en ce que**
la partie de rétention a une pluralité de barres (2) déplaçables individuellement adaptées afin de se mettre en prise avec un produit (11), en fixant ainsi au moins substantiellement le produit (11) par rapport à la partie de rétention, et **en ce que** les barres (2) sont agencées d'une telle sorte que leurs parties d'extrémité forment un motif, ledit motif comprenant au moins une partie d'au moins un cercle.

2. Système selon la revendication 1, dans lequel chacune des barres (2) est déplaçable dans des directions au moins substantiellement parallèles réciproquement.

3. Système selon la revendication 2, dans lequel l'axe de rotation est aussi au moins substantiellement parallèle à la direction de mouvement des barres (2).

4. Système selon une quelconque des revendications précédentes, dans lequel les barres (2) sont agencées de telle sorte que leurs parties d'extrémité forment un motif, ledit motif comprenant au moins des parties d'au moins deux cercles au moins substantiellement concentriques.

5. Système selon une quelconque des revendications précédentes, comprenant en outre des moyens pour déplacer les barres (2).

6. Système selon la revendication 5, dans lequel les moyens pour déplacer les barres (2) sont adaptés afin de déplacer chacune des barres (2) dans une direction au moins substantiellement verticale.

7. Système selon la revendication 6, dans lequel les moyens pour déplacer les barres (2) comprennent une partie d'extrémité montée sur chacune des barres (2) et au moins une partie de soulèvement adaptée afin de se mettre en prise avec au moins certaines des parties d'extrémité de manière à déplacer au moins certaines des barres (2).

8. Système selon une quelconque des revendications 5 à 7, dans lequel les moyens pour déplacer les barres (2) comprennent au moins un actionneur.

9. Système selon une quelconque des revendications précédentes, dans lequel la partie de rétention comprend en outre des moyens (1) pour commander l'orientation des barres (2).

10. Système selon la revendication 9, dans lequel les moyens (1) pour commander l'orientation des barres (2) sont adaptés afin de maintenir les barres (2) dans une orientation au moins substantiellement verticale.

11. Système selon une quelconque des revendications précédentes, comprenant en outre un convoyeur (9) pour recevoir un produit (11), le convoyeur (9) étant positionné en dessous du système de rotation, et dans lequel le système de rotation est adapté afin d'être abaissé sur un produit arrivant (11).

12. Système selon une quelconque des revendications précédentes, dans lequel les moyens pour déterminer l'orientation de chaque produit (11) comprennent des moyens optiques.

13. Système selon la revendication 12, dans lequel les moyens optiques comprennent une caméra.

14. Système de transport comprenant un système pour mettre en rotation des produit (11), au moins un convoyeur (12) positionné en amont du système, et au moins un convoyeur (13) positionné en aval du système, **caractérisé en ce que** le système pour mettre en rotation des produit est un système selon une quelconque des revendications 1-13.

15. Système de transport selon la revendication 14, ledit système de transport faisant partie d'une ligne de traitement.

16. Procédé pour mettre en rotation un produit, le procédé comprenant les étapes consistant à :
- déterminer l'orientation d'un produit,
- comparer l'orientation du produit avec une orientation désirée,
- sur la base de ladite comparaison, déterminer un angle de rotation nécessaire pour obtenir l'orientation désirée, **caractérisé en ce qu'**il comprend en outre les étapes consistant à :
- déplacer une partie de rétention comprenant une pluralité de barres mises en prise avec le produit, en fixant ainsi au moins substantiellement le produit par rapport à la partie de rétention, lesdites barres étant agencées de sorte que leurs parties d'extrémité forment un motif, ledit motif comprenant au moins une partie d'au moins un cercle, et
- mettre en rotation la partie de rétention selon l'angle de rotation, en mettant ainsi en rotation le produit selon l'angle de rotation.

17. Procédé selon la revendication 16, dans lequel l'étape de détermination de l'orientation du produit est exécutée au moyen d'une technique basée sur la vision.
